(19) Europäisches Patentamt
European Patent Office
Office européen des brevets

(11) **EP 2 151 756 A2**

(12) **EUROPEAN PATENT APPLICATION**

(43) Date of publication:
**10.02.2010 Bulletin 2010/06**

(51) Int Cl.:
***G06F 9/455*** *(2006.01)*

(21) Application number: **09251574.1**

(22) Date of filing: **16.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **30.07.2008 JP 2008195936**

(71) Applicant: **Hitachi Ltd.**
**Chiyoda-ku**
**Tokyo (JP)**

(72) Inventors:
 • **Takano, Mitsuhiro**
  **Tokyo 100-8220 (JP)**
 • **Ueno, Hitoshi**
  **Tokyo 100-8220 (JP)**

(74) Representative: **Calderbank, Thomas Roger et al**
**Mewburn Ellis LLP**
**33 Gutter Lane**
**London**
**EC2V 8AS (GB)**

(54) **Virtual machine system and control method of the virtual machine system**

(57)     In a control method of a virtual machine system, when a virtual machine (109) operating in a physical machine (106) is transferred to another physical machine (107), a management server (101) stops the virtual machine (109) of transfer source and defines a virtual machine (110) of transfer destination in the other physical machine (107). A virtual network address and a virtual storage interface address of the virtual machine (109) of transfer source is exchanged with a virtual network address and a virtual storage interface address defined in the virtual machine (110) of transfer destination in the state that the virtual machine (110) is prevented from being activated and then prevention of activation of the virtual machine (110) of transfer destination is canceled, so that transfer processing can be made safely by simple procedure.

FIG.1

Printed by Jouve, 75001 PARIS (FR)

EP 2 151 756 A2

**Description**

The present invention relates to a control method of a virtual machine system and more particularly to a control method in which a management server which treats network interfaces and storage interfaces as interfaces with the outside provided in virtual machines transparently from peripheral apparatuses and does not put information about virtual machines together is used to transfer a virtual machine between physical machines safely.

Virtual computers are technique of being put to practical use as a measure for utilizing resources of physical machines effectively. Particularly, attention is paid to a use in which a plurality of physical machines having low utilization factor are operated as virtual machines to put resources together and economize on storage, network and electric power.

Virtual machines have a lot of merits of putting physical resources together and economizing on electric power, although recently there arises a problem that management of virtual machines is complicated. When a large number of virtual machines are treated, this tendency appears remarkably.

When it is defined as transfer of a virtual machine that a guest system in a virtual machine operating in a physical machine is once stopped and then operated in a virtual machine operating in another physical machine, it is necessary to make management so as to grasp what kind of state each virtual machine is in when operation and management are performed so as to transfer a virtual machine between physical machines and how apparatuses connected to the virtual machine are influenced when the virtual machine is transferred, for example, and all of physical machines and virtual machines containing management server are considered to be treated as a complicated system.

Such a system is disclosed in techniques described in ESX Server 3i Configuration Guide, Storage 7 - Raw Device Mapping - Benefits of Raw Device Mapping(p113-115)
<URL:http://www.vmware.com/pdf/vi3_35/esx_3i_e/r35/vi3_ 35_25_3i_server_config.pdf> (document 1) and Cisco MDS and Emulex Virtual HBA Solutions for VMware Infrastructure 3, 6. Array level LUN Masking, Mapping and VMotion (p12-14)
<URL:http://www.emulex.com/white/hba/CiscoEmulexVirtual izationforVMware.pdf> (document 2).

However, as described in the above documents 1 and 2, when a virtual machine is transferred between physical machines, management software controls network and storage so as not to influence peripheral environment of the virtual machine, although the management software is provided differently from software for controlling the virtual machine and each apparatus is required to be operated while notice is taken so as not to cause faults interfering with transfer of the virtual machine, so that complicated control is required.

For example, both of physical machines of transfer source and transfer destination must be allowed to access storage. Furthermore, if storage in which a virtual machine is stored is not accessed by the physical machines of transfer source and transfer destination, the virtual machine cannot be transferred between the physical machines.

Accordingly, heretofore, in order to realize transfer of the virtual machine between the physical machines, a medium utilized as storage of the virtual machine is allowed to be accessed by a plurality of physical machines which will be transfer destinations. By utilizing this configuration, the physical machines of transfer source and transfer destination can access the same disk and the virtual machine can be transferred between the physical machines, although this configuration allows a plurality of physical machines and further a plurality of virtual machines access the disk simultaneously.

Since a general disk in which an operating system (OS) started in a virtual machine is stored do not have the configuration presupposing that the disk is utilized in environment in which the disk is shared by a plurality of computers, there arises a problem that the disk accessed simultaneously by the plurality of computers cannot ensure consistency in the file system to thereby be damaged.

Moreover, some storage controllers have configuration in which disks are associated with storage interfaces of physical machine in order to exclude the above danger, although since the storage utilizing this function receives only access from specified storage interface, it is necessary that management software of the storage controller is used to control the storage controller in order to transfer a virtual machine between physical machines.

Further, an intensive management server is required in order to prevent simultaneous activation and grasp the states of network and storage. When any fault occurs in the intensive management server, information about operation of virtual machines is lost, so that it is difficult to grasp which physical machine each virtual machine is operated in and what state each virtual machine is operated in.

For example, in the technique described in the above document 2, it is disclosed that when one virtual machine is transferred to another physical machine, virtual WWN of virtual FC-HBA which is an interface for storage connection held in the virtual machine is not required to be changed.

When this method is adopted, it is not necessary to change setting for WWN by transferring the virtual machine in the configuration in which disks in the storage controller are associated with storage interfaces of machines.

However, according to the technique of the document 2, measures for managing which virtual WWN is used in which physical machine when a virtual machine is transferred between physical machines or what virtual WWN is assigned to a new virtual machine so as to avoid duplication when a new virtual WWN is assigned to the new virtual machine are required and when the management measures are lost due to fault, there arises a problem that assignment of virtual WWN cannot be managed.

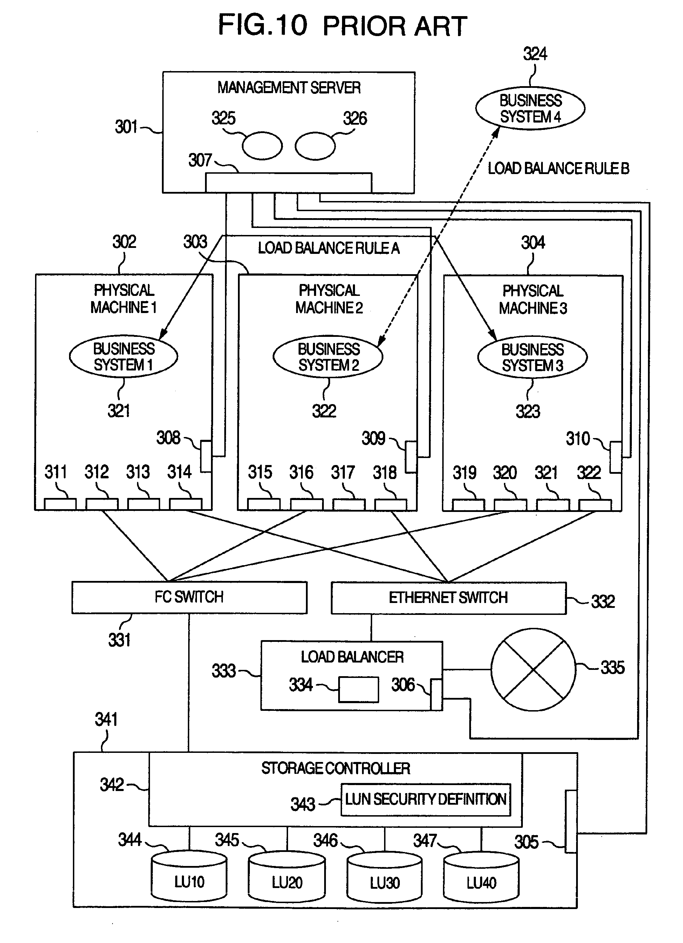

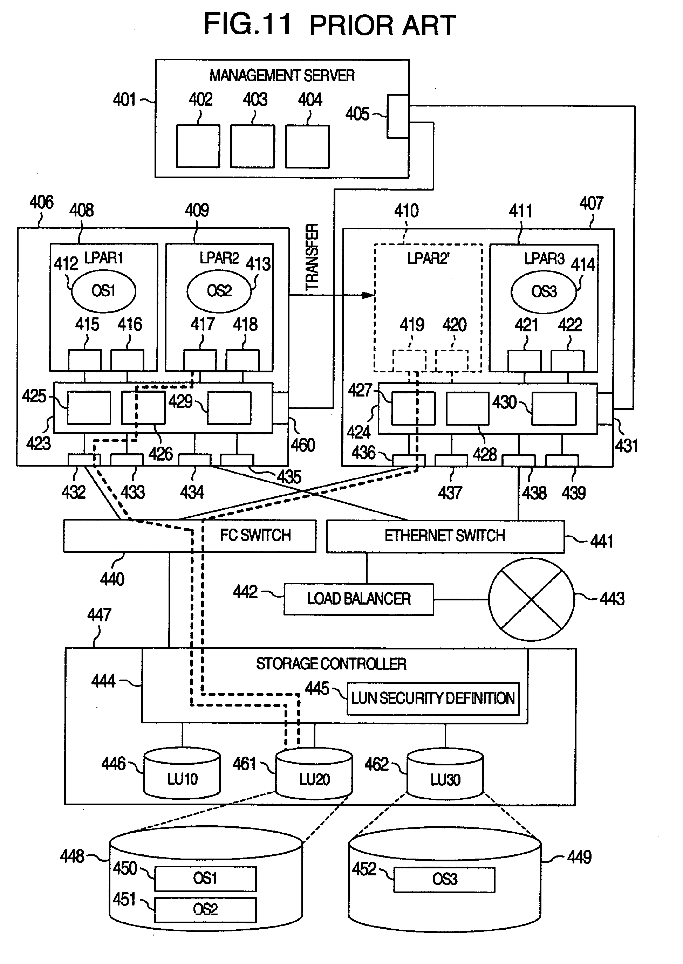

Referring now to Figs. 10 and 11, specific problems caused by complicated control in a conventional virtual machine system are described. Figs. 10 and 11 schematically illustrate specific problems in control of the conventional virtual machine system and Fig. 10 illustrates scale-in and scale-out operation using physical machine, Fig. 11 illustrating transfer operation of virtual machine using the virtual server technique.

The system shown in Fig. 10 includes a management server 301, three physical machines 302, 303 and 304, an FC switch 331, an Ethernet (registered trademark) switch 332, a load balancer 333, a storage apparatus 341 and an external network 335 connected to the load balancer externally. The physical machines include physical FC HBA's 311, 312, 315, 316, 319 and 320, physical NIC's 313, 314, 317, 318, 321 and 322 and management NIC's 308, 309 and 310.

Furthermore, a business system 1 321 stored in LU10 344 and a business system 3 323 stored in LU30 346 have the same function. The load balancer is used to distribute or disperse loads on the two systems in accordance with load balancer rule A.

A business system 2 322 stored in LU20 345 and a business system 4 324 stored in LU40 347 have the same function. It is supposed that only the business system 2 is activated.

At this time, when the processing capability of the business system 3 is not required and it is necessary to change the present configuration to the configuration in which the business system 4 324 is activated and loads are distributed between the business system 4 324 and the business system 2 in accordance with load balancer rule B, the following operations are required.

(1) The management server 301 instructs the business system 3 operating in the physical machine 3 to be stopped through NIC's 307 and 310 provided in management server 301 and physical machine 3, respectively.
(2) The management server 301 instructs storage controller 342 to change LUN security definition 343 through NIC's 307 and 305.

```
* LU 30 ⇔ WWN 30

        ↓ change

* LU 40 ⇔ WWN 30
```

In order that the management server 301 issues an instruction to the storage controller, the management server 301 requires management software 325 for storage controller.
(3) The management server 301 instructs the load balancer to cancel registration of business system 3 from load balancer rule A stored in a rule table 334 managed in the load balancer through NIC's 307 and 306 provided in management server and load balancer, respectively.

```
* business system 1 ⇔ business system 3

        ↓ change

* business system 1
```

In order that the management server 301 issues an instruction to the load balancer, the management server 301 requires management software 326 for load balancer.
(4) The management server 301 instructs the load balancer to add registration of business system 4 in load balancer rule B through respective NIC's.

```
                    * business system 2

                        ↓ change

      * business system 2 ⇔ business system 4
```

In the same manner as above, in order that the management server 301 issues an instruction to the load balancer in this operation, the management server 301 requires to install management software corresponding to load balancer.

(5) The management server 301 instructs the physical machine 3 to be activated through respective NIC's.

The procedure as described above is generated, so that there arises a problem that control cannot be performed only by management of the physical machines and management of the storage controller and the load balancer is required.

Furthermore, the system shown in Fig. 11 includes a management server 401, two physical machines 406 and 407, an FC switch 440, an Ethernet (registered trademark) switch 441, a load balancer 442, a storage 447 and an external network 443. Virtual machines of LPAR1 408, LPAR2 409 and LPAR3 411 are operated in the physical machines and operating systems OS1 412, OS2 413 and OS3 414 are operated in these virtual machines.

When the virtual machine is transferred, the management server 401 intensively manages configuration information about the virtual machine so as not to use the same information in transfer source and destination. When LPAR 2 is transferred from the physical machine 406 of transfer source to the physical machine 407 of transfer destination, the following processing is performed using information managed by the management server 401.

(1) The management server 401 requests a hypervisor agent 429 of the physical machine of transfer source to stop the virtual machine of transfer source through NIC 405 of the management server 401 and NIC 460 of the physical machine of transfer source.

(2) The management server 401 requests a hypervisor agent 430 of the physical machine of transfer destination to activate the virtual machine 410 of transfer destination through NIC 405 of the management server 401 and NIC 431 of the physical machine of transfer destination.

The management server 401 manages information in the physical machines of transfer source and transfer destination in the above stages by means of CPU 402, main memory 403 and storage 404 so as not to prevent information in the physical machines of transfer source and transfer destination from being overlapped.

More particularly, whether information in virtual FC HBA's 415, 417, 419 and 421 which are virtualized physical FC HBA's 432, 433, 436 and 437 and virtual NIC's 416, 418, 420 and 422 which are virtualized physical NIC's 434, 435, 438 and 439 is overlapped is managed with reference to virtual FC HBA management tables 425 and 427 and virtual NIC management tables 426 and 428 held in hypervisors 423 and 424.

In the conventional system, generally, WWN and MAC addresses are not virtualized and physical WWN and MAC addresses are utilized by virtual machines.

In the virtual server system, a plurality of operating systems (OS's) are sometimes stored in a single LU by means of special file system. In this system, partition 450 for OS 1 and partition 451 for OS 2 are stored in LU20 448.

Furthermore, partition 452 for OS 3 is stored in LU30 449. This system has the following demerits:

(1) When a physical machine accesses LU without using hypervisor, it is apprehended that unexpected file system is accessed and disk is damaged.

(2) Since the management server 401 holds configuration information about virtual machines intensively, another computer cannot be substituted therefor.

(3) Since virtualization of WWN is not supported, a manager defines LUN security definition 445 of storage controller 444 as follows and releases LU 20 to plural WWN's. Plural servers can make access and accordingly it is apprehended that contents of disk are damaged when plural servers are operated simultaneously.

* LU10 446 ⇔ WWN 10

* LU20 461 ⇔ WWN 20

* LU20 461 ⇔ WWN 30

* LU30 462 ⇔ WWN 40

Accordingly, it is a preferred aim of the present invention to provide a control method of a virtual machine system which can transfer a virtual machine safely by simple procedure.

The above and other preferred aims and novel features of the present invention will be apparent from the following description of the specification when taken in conjunction with the accompanying drawings.

An outline of representative aspects of the present invention is as follows.

According to a representative aspect of the present invention, when a virtual machine operating in a physical machine is transferred to another physical machine, the management part stops the virtual machine of transfer source and defines the virtual machine of transfer destination in the other physical machine. Then, the management part changes configuration information of the virtual machines of transfer source and transfer destination in the state that the virtual machine is prevented from being activated and, after the configuration information is changed, cancels prevention of activation of the virtual machine of transfer destination.

The effects gotten by the representative aspects of the present invention disclosed in this specification are briefly described as follows:

That is, since MAC address and virtual WWN of the virtual machine are not changed before and after transfer, setting of network apparatuses such as router and load balancer and SAN storage apparatuses is not required to be changed and control means for transferring the virtual machine can be simplified.

Moreover, since the virtual machine can be transferred while the single virtual machine corresponds to LU in the storage apparatus on a one-to-one basis, data stored in disk is not broken due to wrong duplicate access to the LU by another server, so that reliability is improved.

An outline of the present invention is now described.

According to the present invention, since the network and storage do not influence another management software when the virtual machine is transferred, the network interface and the storage interface of the virtual machines of transfer source and transfer destination are made to be viewed as identical from the periphery of the virtual machine.

As described above, the network interface and the storage interface are treated transparently, so that the virtual machine is abstracted and even when the virtual machine is operated in any physical machine, the virtual machine can be operated without influencing management software of network and storage.

Moreover, in order to configure transparent network interface and storage interface from the periphery of the virtual machine, there is provided a measure for exchanging virtual MAC address and virtual WWN held by the virtual machine of transfer source with virtual MAC address and virtual WWN held by the virtual machine of transfer destination to be set.

MAC address which is an identifier of the physical network interface and WWN which is an identifier of the physical storage interface are virtualized, so that the management server exchanges virtual MAC address and virtual WWN between the virtual machines of transfer source and transfer destination in transfer of the virtual machine and, even when which physical machine the virtual machine is operated in, treats the virtual machine as the same virtual machine in management software of network and storage.

Thus, the management software of network and storage does not require operation accompanying transfer of the virtual machine. However, when a measure for exchanging virtual MAC address and virtual WWN is provided, there is a possibility that virtual MAC address and virtual WWN are overlapped in the virtual machines of transfer source and transfer destination. For example, when a plurality of virtual machines having duplicate virtual MAC address and virtual WWN are activated simultaneously, physical identifiers are overlapped for network and storage and accordingly there is a possibility that unexpected network address is assigned or storage is broken due to simultaneous accesses from plural computers.

According to the present invention, in order to prevent that the plurality of virtual machines having duplicate identifiers for interfaces are activated simultaneously, the function of preventing the virtual machine from being activated is provided. Further, when hardware trouble or software trouble occurs on the way of transfer operation of virtual machine or management of the transfer operation is insufficient, it is not understood sometimes which virtual machine is operated in which physical machine and accordingly there is provided means for analyzing arrangement information of virtual machines to be displayed.

Other objects, features and advantages of the invention will become apparent from the following description of the embodiments of the invention taken in conjunction with the accompanying drawings.

In the drawings:

Fig. 1 is a schematic diagram illustrating a virtual machine system to which a control method according to an embodiment of the present invention is applied;

Fig. 2 is a diagram illustrating transfer operation of a virtual machine by the control method according to the embodiment of the present invention;

Fig. 3 is a diagram illustrating transfer operation of a virtual machine by the control method according to the embodiment of the present invention;

Fig. 4 is a diagram illustrating transfer operation of a virtual machine by the control method according to the embodiment of the present invention;

Fig. 5 is a diagram showing transfer sequence operation of a virtual machine by the control method according to the embodiment of the present invention;

Fig. 6 is a flow chart showing processing operation of a script program for performing transfer processing of a virtual machine by the control method according to the embodiment of the present invention;

Fig. 7 is a flow chart showing processing operation of a script program for analyzing virtual WWN by the control method according to the embodiment of the present invention;

Fig. 8 is a flow chart showing processing operation of a script program for analyzing virtual MAC address by the control method according to the embodiment of the present invention;

Fig. 9 is a flow chart showing processing operation of a script program for retrieving hypervisor agent by the control method according to the embodiment of the present invention;

Fig. 10 is a diagram illustrating concrete problems in control of a conventional virtual machine system; and

Fig. 11 is a diagram illustrating concrete problems in control of a conventional virtual machine system.

Embodiments of the present invention are now described with reference to the accompanying drawings. The like constituent elements are designated by the like reference numerals throughout the drawings for illustrating the embodiments in principle and repeated description thereof is omitted.

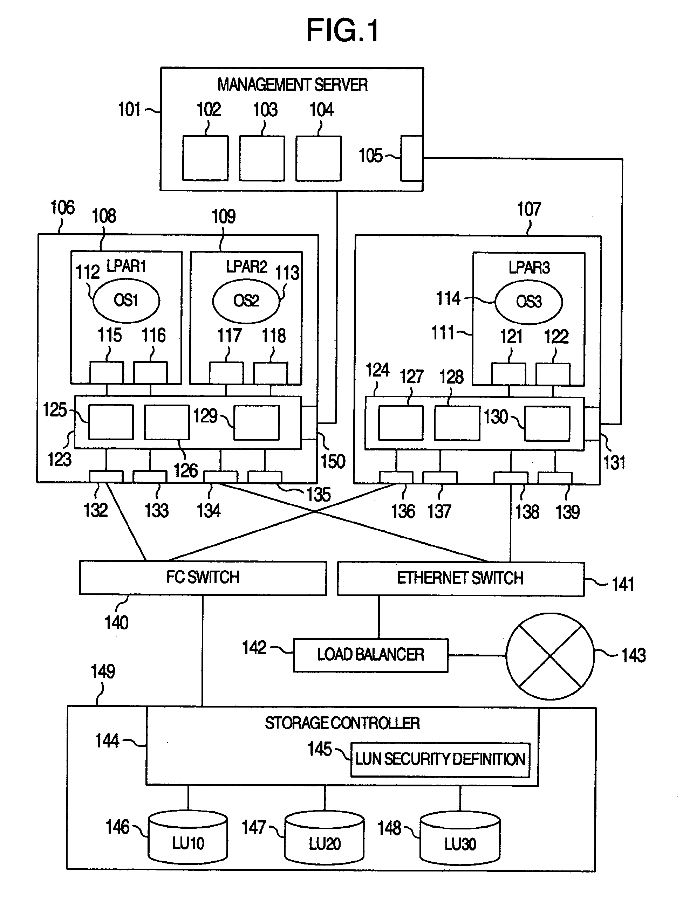

Referring now to Fig. 1, configuration of a virtual machine system to which a control method according to an embodiment of the present invention is applied is described. Fig. 1 is a schematic diagram illustrating the virtual machine system to which the control method according to the embodiment of the present invention is applied.

In Fig. 1, the virtual machine system includes a management server 101 constituting a management part having a central processing unit (CPU) 102, a main memory 103, a storage 104 and a network interface 105, two physical machines 106 and 107, an FC switch 140, an Ethernet (registered trademark) switch 141, a load balancer 142 and a storage apparatus 149 and is connected to an external network 143.

At this time, hypervisors 123 and 124 constituting control parts are operated in the physical machines 106 and 107 and manage virtual machines in response to instructions from hypervisor agents 129 and 130, respectively.

The hypervisor agents 129 and 130 can receive instructions from the management server 101 through network interfaces 150 and 131 and can change behavior or operation of the hypervisors 123 and 124, respectively.

The hypervisors 123 and 124 include virtual FC HBA management tables 125 and 127 for associating physical FC HBA's 132, 133, 136 and 137 with virtual FC HBA's 115, 117 and 121 in order to utilize physical FC HBA's 132, 133, 136 and 137 by virtual machines 108, 109 and 111 in a shared manner.

Similarly, the hypervisors 123 and 124 include virtual NIC management tables 126 and 128 for associating physical NIC's 134, 135, 138 and 139 with virtual NIC's 116, 118 and 122 in order to utilize the physical NIC's 134, 135, 138 and 139 by virtual machines in a shared manner.

At this time, OS1 112, OS2 113 and OS3 114 stored in LU10 146, LU20 147 and LU30 148, respectively, are being operated in the virtual machines 108, 109 and 111, respectively, in parallel.

Furthermore, the storage controller 144 operates LUN security definition 145, so that virtual FC HBA's 115, 117 and 121 are allowed to access only LU10 146, LU20 147 and LU30 148, respectively.

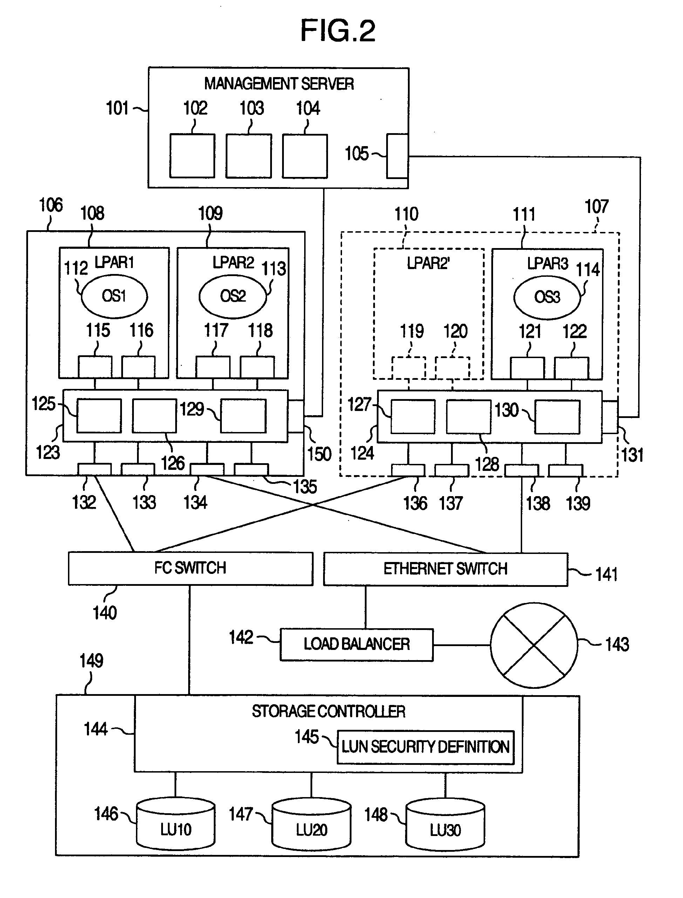

Referring now to Figs. 2 to 4, transfer operation of virtual machine by the control method according to the embodiment of the present invention is described. Figs. 2 to 4 are diagrams illustrating transfer operation of a virtual machine by the control method according to the embodiment of the present invention and show states of the virtual machine system at the time that the hypervisors 123 and 124 perform processing in response to instructions issued from the management server 101 to the hypervisors 123 and 124 in predetermined order in order to prevent virtual machines from being activated simultaneously and transfer the virtual machine.

(1) First, as shown in Fig. 2, the management server 101 defines a virtual machine 110 of transfer destination. The virtual machine 110 includes virtual FC HBA 119 and virtual NIC 120 similarly to other virtual machines 108, 109 and 111.

(2) The hypervisor agent 130 operating in the physical machine 107 of transfer destination prevents the defined virtual machine 110 of transfer destination from being activated in response to instructions from the management server 101. The virtual machine which is prevented from being activated cannot be activated from its stopped state.

(3) The hypervisor agent 129 operating in the physical machine 106 of transfer source stops OS 2 of the virtual machine 109 of transfer source in response to instructions from the management server 101. When the OS 2 is stopped, no disk access to LU20 147 occurs.

(4) The management server 101 inquires the state of the virtual machine to the hypervisor agent 129 operating in the physical machine 106 of transfer source and confirms that the virtual machine 109 of transfer source is stopped.

(5) The hypervisor agent 129 operating in the physical machine 106 of transfer source prevents the virtual machine 109 of transfer source from being activated in response to instructions from the management server 101.

(6) The management server 101 exchanges virtual WWN's between the virtual machine 109 of transfer source and the virtual machine 110 of transfer destination. The exchange is made by the following procedures (a) to (d).

(a) The management server 101 gets virtual WWN set in the virtual FC HBA 117 of the virtual machine 109 of transfer source from the hypervisor agent 129 operating in the physical machine 106 of transfer source. The virtual WWN gotten is stored in the main memory 103 of the management server 101.

(b) The management server 101 gets virtual WWN set in the virtual FC HBA 119 of the virtual machine 110 of transfer destination from the hypervisor agent 130 operating in the physical machine 107 of transfer destination. The virtual WWN gotten is stored in the main memory 103 of the management server 101.

(c) The management server 101 issues instructions to the hypervisor agent 130 operating in the physical machine 107 of transfer destination and requests to set the gotten virtual WWN of the virtual machine 109 of transfer source to the virtual FC HBA 119 of the virtual machine 110 of transfer destination. The management server 101 receives a response from the hypervisor agent 130 to confirm completion of the setting.

(d) The management server 101 issues instructions to the hypervisor agent 129 operating in the physical machine 106 of transfer source and requests to set the gotten virtual WWN of the virtual machine 110 of transfer destination to the virtual FC HBA 117 of the virtual machine 109 of transfer source. The management server 101 receives a response from the hypervisor agent 129 to confirm completion of the setting.

(7) Virtual MAC addresses for virtual NIC's 118 and 120 of the virtual machine 109 of transfer source and the virtual machine 110 of transfer destination are exchanged between them. The exchange procedure is the same as the above procedures (a) to (d).

(8) Time difference information is exchanged between the virtual machine 109 of transfer source and the virtual machine 110 of transfer destination. The exchange procedure is the same as the above procedures (a) to (d). The time difference information is contained in information of the virtual machines managed by the hypervisors 123 and 124.

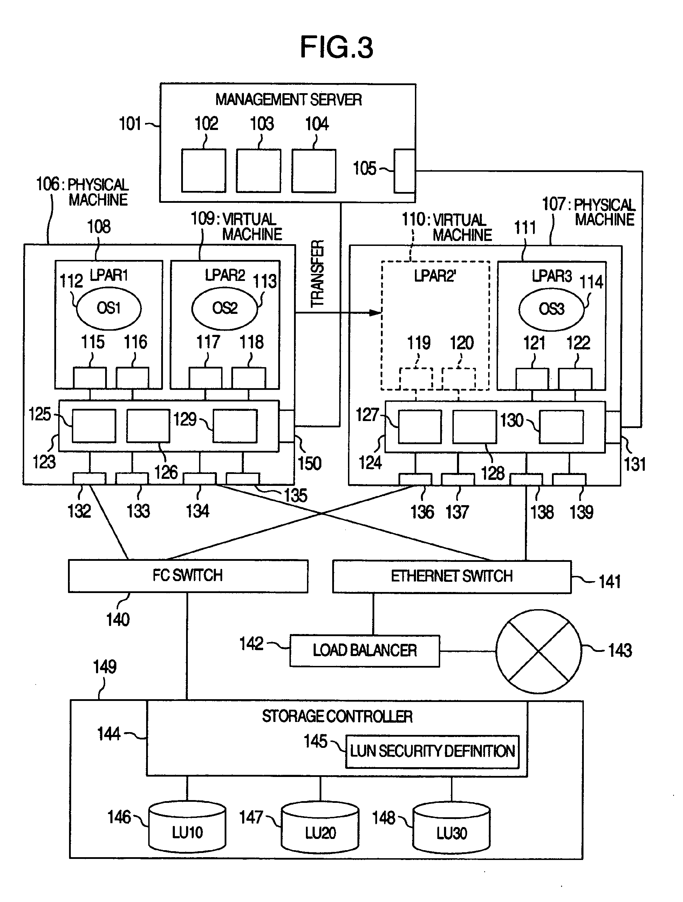

Fig. 3 shows the state at this time.

(9) The hypervisor agent 130 operating in the physical machine 107 of transfer destination cancels prevention of activation of the virtual machine 110 of transfer destination in response to instructions from the management server 101.

(10) The hypervisor agent 130 operating in the physical machine 107 of transfer destination activates the virtual machine 110 of the transfer destination in response to instructions from the management server 101.

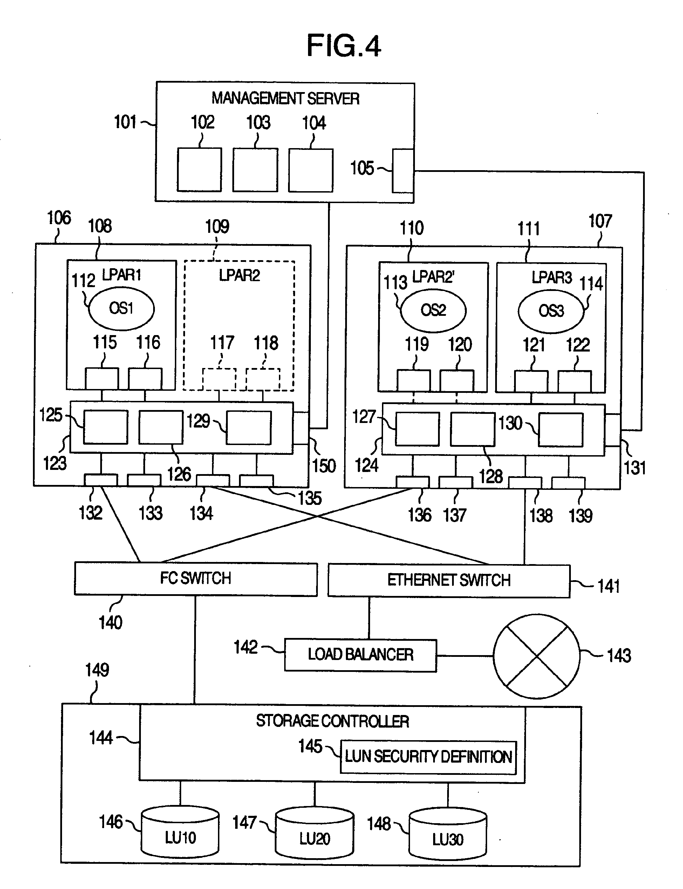

Consequently, the state is as shown in Fig. 4 and OS 2 is started in the virtual machine 110 of transfer destination.

According to the above procedures, the virtual machine can be transferred between the physical machines. Exchange of configuration information (virtual WWN, virtual MAC address and time difference information) between the virtual machines 109 and 110 of transfer source and transfer destination can be made in random order.

Furthermore, when the procedure of the same transfer is made between virtual machines in the same group, the virtual machine which was transfer source is left as a defined virtual machine after completion of transfer and accordingly the procedure of defining the virtual machine of transfer destination is not required.

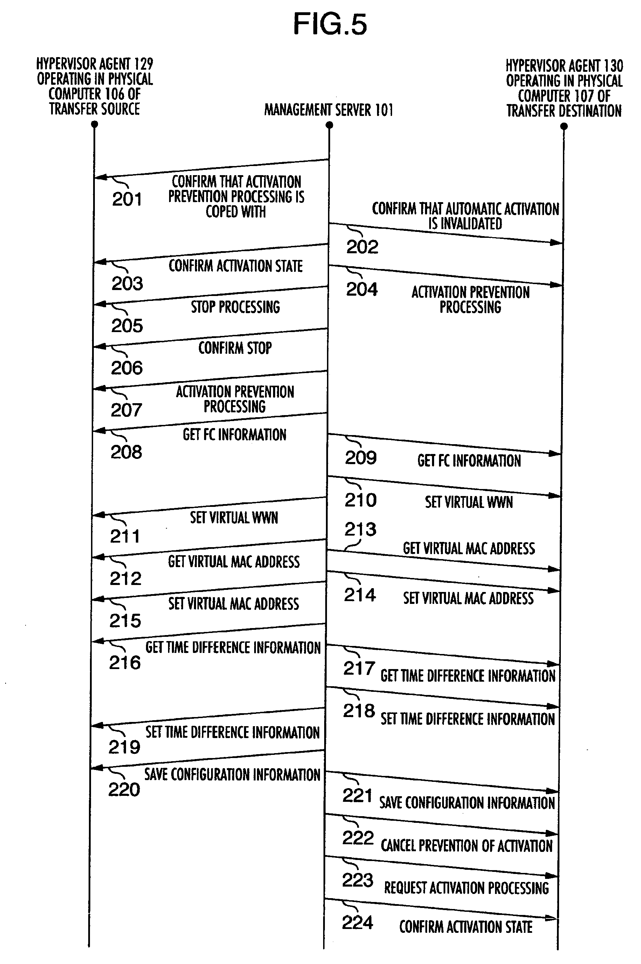

Referring now to Fig. 5, the transfer sequence operation of a virtual machine by the control method according to the embodiment of the present invention is described. Fig. 5 is a diagram showing transfer sequence operation of a virtual machine by the control method according to the embodiment of the present invention and is shown while attention is paid to the hypervisor agent 129 operating in the physical machine 106 of transfer source, the management server 101 and the hypervisor agent 130 operating in the physical machine 107 of transfer destination. The control procedure shown in Fig. 5 is supposed to be LPAR transfer sequence.

(1) The management server 101 makes the hypervisor agent 129 operating in the computer of transfer source confirm that activation prevention processing is coped with (step 201). This reason is that configuration information such as virtual WWN and virtual MAC address cannot be exchanged between the virtual machine 109 of transfer source and the virtual machine 110 of transfer destination safely unless both of the virtual machines 109 and 110 are prevented from being activated when the configuration information is exchanged between the virtual machines 109 and 110.

(2) The management server 101 makes the hypervisor agent 130 operating in the computer of transfer destination confirm that automatic activation in the virtual machine 110 of transfer destination is invalidated (step 202). This reason is that when unexpected reactivation occurs in the physical machine 107 of transfer destination in case where automatic activation is valid, there is a possibility that the virtual machine 110 is activated while holding unexpected configuration information and it is not safe.

(3) The management server 101 makes the hypervisor agent 129 operating in the physical machine 106 of transfer source confirm the activation state of the virtual machine 109 of transfer source (step 203). The management server 101 judges whether it is necessary to stop the virtual machine 109 of transfer source on the basis of the confirmation of activation state.

(4) The management server 101 instructs the hypervisor agent 130 operating in the physical machine 107 of transfer destination to prevent the virtual machine 110 of transfer destination from being activated (step 204). The virtual machine 110 of transfer destination can be prevented from being activated by the activation prevention processing to thereby be prevented from being activated while configuration information is exchanged, so that configuration information can be exchanged safely.

(5) When the virtual machine 109 of transfer source is in the activation state in case where the management server 101 makes the hypervisor agent 129 operating in the physical machine 106 of transfer source confirm the activation state of the virtual machine 109 of transfer source in step 203, the management server 101 requests the hypervisor agent operating in the computer of transfer source to stop the virtual machine of transfer source (step 205). This reason is that the virtual machine cannot be transferred safely in the state that the virtual machine is activated.

(6) The management server 101 confirms that the hypervisor agent 129 operating in the physical machine 106 of transfer source receives the request of stop processing in step 205 and performs the stop processing normally, so that the management server confirms stop of the virtual machine (step 206).

(7) The management server 101 makes the hypervisor agent 129 operating in the physical machine 106 of transfer source prevent the virtual machine 109 of transfer source from being activated (step 207). At this stage, the virtual machine 109 of transfer source can be prevented from being activated, so that the virtual machines 109 and 110 of transfer source and transfer destination are in the activation prevention state to prevent both the virtual machines 109 and 110 from being activated even while configuration information is exchanged between them, so that configuration information can be exchanged safely.

(8) The management server 101 requests the hypervisor agent operating in the computer of transfer source to get FC information of the virtual machine of transfer source (step 208). The management server 101 gets which physical FC HBA the virtual machine utilizes or virtual WWN set in virtual FC HBA by this request.

(9) The management server 101 requests the hypervisor agent 130 operating in the physical machine 107 of transfer destination to get FC information of the virtual machine 110 of transfer destination (step 209).

(10) The management server 101 requests the hypervisor agent 130 operating in the physical machine 107 of transfer destination to set virtual WWN of the virtual machine 110 of transfer destination (step 210). Value of the virtual WWN requested to be set is contained in information gotten when FC information is gotten in step 208.

(11) The management server 101 requests the hypervisor agent 129 operating in the physical machine 106 of transfer source to set virtual WNN of the virtual machine 109 of transfer source (step 211). Value of the virtual WWN requested to be set is contained in information gotten when FC information is gotten in step 209.

(12) The management server 101 requests the hypervisor agent 129 operating in the physical machine 106 of transfer source to get virtual MAC address of the virtual machine 109 of transfer source (step 212).

(13) The management server 101 requests the hypervisor agent 130 operating in the physical machine 107 of transfer destination to get virtual MAC address of the virtual machine 110 of transfer destination (step 213).

(14) The management server 101 requests the hypervisor agent 130 operating in the physical machine 107 of transfer destination to set virtual MAC address of the virtual machine 110 of transfer destination (step 214). Value of the virtual MAC address requested to be set is contained in information gotten when the hypervisor agent 129 operating in the physical machine 106 of transfer destination gets the virtual MAC address.

(15) The management server 101 requests the hypervisor agent 129 operating in the physical machine 106 of transfer source to set virtual MAC address of the virtual machine 109 of transfer source (step 215). Value of the virtual MAC address requested to be set is contained in information gotten when the hypervisor agent 130 operating in the physical machine 107 of transfer destination gets the virtual MAC address.

(16) The management server 101 request the hypervisor agent 129 operating in the physical machine 106 of transfer source to get time difference information about the virtual machine 109 of transfer source (step 216). The time difference information contains time difference information between the hypervisor 123 of the physical machine 106 of transfer source and the virtual machine 109 of transfer source.

(17) The management server 101 requests the hypervisor agent 130 operating in the physical machine 107 of transfer destination to get time difference information about the virtual machine 110 of transfer destination (step 217). The time difference information contains time difference information between the hypervisor 124 of the physical machine 107 of transfer destination and the virtual machine 110 of transfer destination.

(18) The management server 101 requests the hypervisor agent 130 operating in the physical machine 107 of transfer destination to set time difference information of the virtual machine 110 of transfer destination (step 218). The time difference information requested to be set is contained in information gotten when the time difference information requested to the hypervisor agent 129 operating in the physical machine 106 of transfer source is gotten in step 216.

(19) The management server 101 requests the hypervisor agent 129 operating in the physical machine 106 of transfer source to set time difference information of the virtual machine 109 of transfer source (step 219). The time difference information requested to be set is contained in information gotten when the time difference information requested to the hypervisor agent 130 operating in the physical machine 107 of transfer destination is gotten in step 217.

(20) The management server 101 requests the hypervisor agent 129 operating in the physical machine 106 of transfer source to save configuration information (step 220). After the configuration information is saved, the physical machine 106 of transfer source is activated in the state that the virtual machine 109 has been transferred even when the physical machine 106 is reactivated.

(21) The management server 101 requests the hypervisor agent 130 operating in the physical machine 107 of transfer destination to save configuration information (step 221). After the configuration information is saved, the physical machine 107 of transfer destination is activated in the state that the virtual machine 110 has been transferred even when the physical machine 107 is reactivated.

(22) The management server 101 requests the hypervisor agent 130 operating in the physical machine 107 of transfer destination to cancel prevention of activation of the virtual machine 110 of transfer destination (step 222). Consequently, the activation prevention processing in step 204 performed just after the LPAR transfer processing is begun is canceled, so that the virtual machine 110 of transfer destination is in the state that it can be activated.

(23) The management server 101 requests the hypervisor agent 130 operating in the physical machine 107 of transfer destination to activate the virtual machine 110 of transfer destination (step 223). The virtual machine 110 which has received the request of activation processing is activated from the disk which the virtual machine 109 of transfer source has accessed.

(24) The management server 101 makes the hypervisor agent 130 operating in the physical machine 107 of transfer destination confirm the activation state of the virtual machine 110 of transfer destination (step 224). The activation state of the virtual machine 110 of transfer destination is confirmed, so that it is judged that the virtual machine has been transferred normally and the LPAR transfer processing is ended.

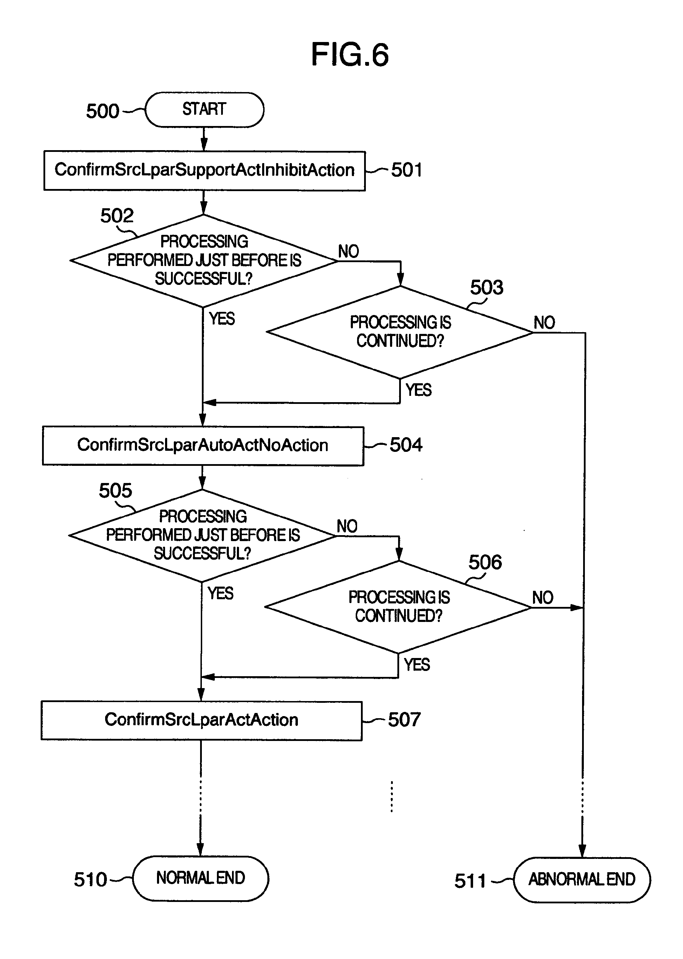

Referring now to Fig. 6, processing of a script program for performing transfer processing of the virtual machine by the control method according to the embodiment of the present invention is described. Fig. 6 is a flow chart showing processing of the script program for performing transfer processing of the virtual machine by the control method according to the embodiment of the present invention. The script program is executed in the management server 101. In Fig. 6, part in which same processing is continued is omitted. Processing operations containing the omitted part are described as follows.

The processing operations are realized by sending instructions to the hypervisor agents 129, 130 operating in the physical machines 106, 107 constituting LPAR's for transfer source and transfer destination.

(1) The script program is started when a start instruction is received from the management server 101 (step 500).

(2) ConfirmSrcLparSupportActInhibitAction [it is confirmed that LPAR of transfer source copes with activation prevention] (step 501).

(3) It is judged whether processing performed just before is successful or not (step 502). When the processing performed just before is not successful in step 502, it is judged whether processing is continued or not (step 503). Information as to whether it is continued or not is inputted by the management server 101. Further, when the processing performed just before is successful in step 502 or when the processing is continued in step 503, the processing proceeds to next step. When it is judged that the processing is not continued in step 503, it is judged as abnormal end and a response to the effect that the script program is ended abnormally is returned to the management server 101 (step 511).

(4) ConfirmSrcLparAutoActNoAction [it is confirmed that automatic activation of LPAR of transfer source is invalid] (step 504).

(5) It is judged whether the processing performed just before is successful or not (step 505). When the processing performed just before is not successful in step 505, it is judged whether the processing is continued or not (step 506). Information for judging whether the processing is continued or not is inputted by the management server 101. When the processing performed just before is successful in step 505 or when the processing is continued in step 506, the processing proceeds to next step and when the processing is not continued in step 506, it is judged as abnormal end and a response to the effect that the script program is ended abnormally is returned to the management server 101 (step 511).

Hereinafter, after each processing, the processing in steps 502 and 503 (steps 505 and 506) is performed and when the processing performed just before is successful or when the processing is continued, the processing proceeds to next step. When the processing is not continued, it is processed as abnormal end.

(6) ConfirmSrcLparActAction [it is confirmed that LPAR of transfer source is in the activation state] (step 507). Hereinafter, each processing is performed although not shown.

(7) RequestDestLparActInhibitYesAction [LPAR of transfer destination is set to the activation prevention state].

(8) RequestSrcLparDeactAction [it is requested to stop LPAR of transfer source].

(9) ConfirmSrcLparDeactAction [it is confirmed that LPAR of transfer source is stopped].

(10) RequestSrcLparActInhibitYesAction [LPAR of transfer source is set to the activation prevention state].

(11) SetSrcLparVfcNumberInhibitYesAction [division identifier of virtual FC of LPAR of transfer source is fixed].

(12) SetDestLparVfcNumberInhibitYesAction [division identifier of virtual FC of LPAR of transfer destination is fixed].

(13) GetSrcLparAutoVnicAction [information of virtual NIC of LPAR of transfer source is gotten].

(14) GetDestLparAutoVnicAction [information of virtual NIC of LPAR of transfer destination is gotten].

(15) SetDestLparAutoVnicAction [information of virtual NIC of LPAR of transfer destination is set].

(16) SetSrcLparAutoVnicAction [information of virtual NIC of LPAR of transfer source is set].

(17) GetSrcLparPhysicalFCAction [information of physical FC of LPAR of transfer source is gotten].

(18) GetSrcLparLogicalFCAction [information of virtual FC of LPAR of transfer source is gotten].

(19) GetDestLparPhysicalFCAction [information of physical FC of LPAR of transfer destination is gotten].

(20) GetDestLparLogicalFCAction [information of virtual FC of LPAR of transfer destination is gotten].

(21) SetDestLparWWNAction [information of virtual WWN of LPAR of transfer destination is set].

(22) SetSrcLparWWNAction [information of virtual WWN of LPAR of transfer source is set].

(23) GetSrcLparRTCDifferenceAction [time difference information of LPAR of transfer source is gotten].

(24) GetDestLparRTCDifferenceAction [time difference information of LPAR of transfer destination is gotten].

(25) SetDestLparRTCDifferenceAction [time difference information LPAR of transfer destination is set].

(26) SetSrcLparRTCDifferenceAction [time difference information of LPAR of transfer source is set].

(27) RequestSrcLparSaveConfigAction [it is requested to save configuration information of LPAR of transfer source].

(28) ConfirmSrcLparSaveConfigAction [it is confirm to save configuration information of LPAR of transfer source].

(29) RequestDestLparSaveConfigAction [it is requested to save configuration information of LPAR of transfer destination].

(30) ConfirmDestLparSaveConfigAction [it is confirmed to save configuration information of LPAR of transfer destination].

(31) RequestDestLparActInhibitNoAction [activation prevention state of LPAR of transfer destination is canceled].

(32) RequestDestLparActAction [it is requested to activate LPAR of transfer destination].

(33) ConfirmDestLparActAction [it is confirmed that LPAR of transfer destination is activated].

(34) When all processing operations are completed, it is judged as normal end and a response to the effect that the script program is ended normally is returned to the management server 101 (step 510).

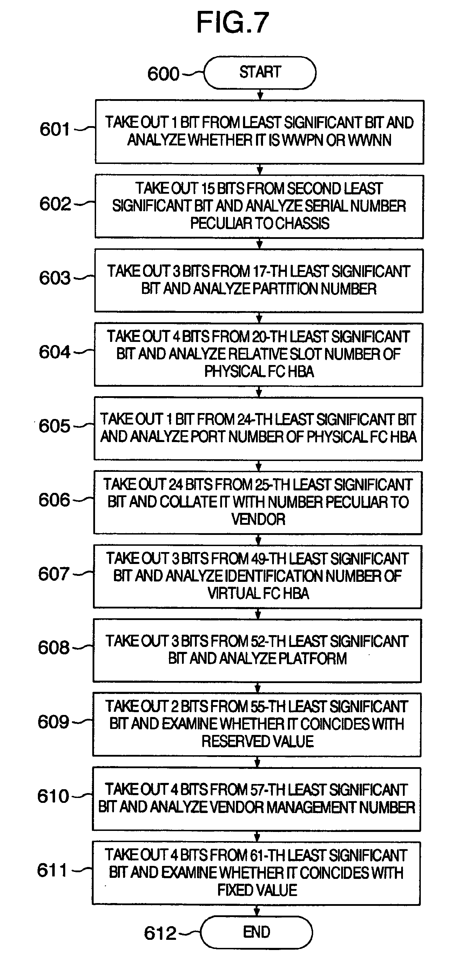

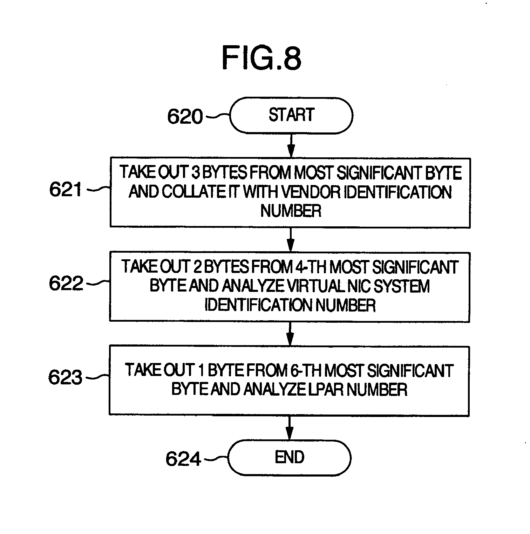

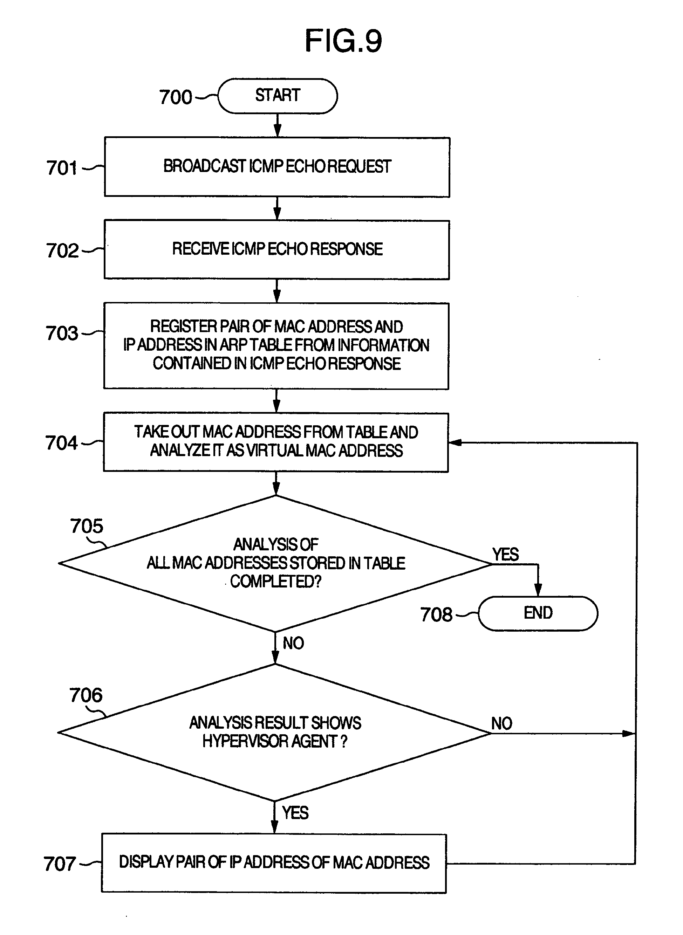

Referring now to Figs. 7 to 9, analysis processing of arrangement information of virtual machines by the control method according to the embodiment of the present invention is described. Fig. 7 is a flow chart showing processing operation by the script program for analyzing virtual WWN by the control method according to the embodiment of the present invention, Fig. 8 is a flow chart showing processing operation of the script program for analyzing virtual MAC address by the control method according to the embodiment of the present invention and Fig. 9 is a flow chart showing processing operation of the script program for retrieving the hypervisor agent by the control method according to the embodiment of the present invention. The script programs are executed in the management server 101.

First, processing operation of the script program for analyzing the virtual WWN is described as shown in Fig. 7.

(1) The script program is started when a start instruction is received from the management server 101 (step 600).

(2) Whether WWN (World Wide Name) is WWPN (World Wide Port Name) or WWNN (World Wide Node Name) is analyzed (step 601). One bit from the least significant bit of virtual WWN shows WWPN or WWNN. The script program takes out this information.

(3) A serial number peculiar to a chassis is analyzed (step 602). 15 bits from the second least significant bit of virtual WWN show the serial number peculiar to the chassis. The script program takes out this information.

(4) A partition number is analyzed (step 603). 3 bits from the 17-th least significant bit of virtual WWN show the partition number. The script program takes out this information.

(5) A relative slot number of physical FC HBA is analyzed (step 604). 4 bits from the 20-th least significant bit of virtual WWN shows the relative slot number of physical FC HBA. The relative slot number is relative expression of difference between physical blade position and physical position in which physical FC HBA is mounted.

(6) A port number of physical FC HBA is analyzed (step 605). One bit from the 24-th least significant bit of virtual WWN shows what port number in physical FC HBA. The script program takes out this information.

(7) The number peculiar to vendor is collated (step 606). 24 bits from the 25-th least significant bit of virtual WWN show the number peculiar to the vendor. The script program takes out this information and confirms that this information is coincident with the number peculiar to the expected vendor.

(8) The identification number of virtual FC HBA is analyzed (step 607). 3 bits from the 49-th least significant bit of virtual WWN shows the identification number of virtual FC HBA. The script program takes out this information. The identification number of virtual FC HBA is a value peculiar to virtual FC HBA assigned to identify each virtual FC HBA when the physical FC HBA is virtualized as a plurality of virtual FC HBA's.

(9) Platform is analyzed (step 608). 3 bits from the 52-th least significant bit of virtual WWN show the platform. The script program takes out this information. The platform is a name given to a hardware product.

(10) Coincidence with reserved value is examined (step 609). The reserved value is stored in 2 bits from the 55-th least significant bit of virtual WWN. The script program takes out this information and confirms that the two bits is coincident with the reserved value.

(11) A vendor management number is analyzed (step 610). 4 bits from the 57-th least significant bit of virtual WWN show the vendor management number. The script program takes out this information. The vendor management number is a value assigned to the vendor for each use so as not to overlap each other in WWN space given to the vendor.

(12) Coincidence with fixed value is examined (step 611). 4 bits from the 61-th least significant bit of virtual WWN is fixed. The script program takes out this information and confirms that it is coincident with the fixed value.

(13) All information is taken out and the script program which has completed analysis is ended (step 612).

Referring now to Fig. 8, processing operation of the script program for analyzing virtual MAC address is described.

(1) The script program starts to analyze virtual MAC address when start instruction is received from the management server 101 (step 620).

(2) Vendor identification number is collated (step 621). 3 bytes from the most significant byte of the virtual MAC address show the vendor identification number. The script program takes out this information and confirms that it is coincident with the expected value.

(3) A virtual NIC system identification number is analyzed (step 622). 2 bytes from the fourth most significant byte of the virtual MAC address are produced on the basis of the virtual NIC system identification number. This information corresponds to the virtual NIC system identification number on a one-to-one basis. The script program takes out this information and analyzes it to take out the virtual NIC system identification number.

(4) LPAR number is analyzed (step 623). One byte from the 6-th most significant byte of the virtual MAC address is produced on the basis of LPAR number. This information corresponds to the LPAR number on a one-to-one basis. The script program takes out this information and analyzes it to take out the LPAR number.

(5) All information is taken out and the script program which has completed analysis is ended (step 624) .

Referring now to Fig. 9, processing operation of the script program for retrieving the hypervisor agent is described.

The hypervisor agents 129 and 130 are configured as a kind of special LPAR. MAC address is analyzed and when specified conditions are satisfied, more concretely, when the management number of LPAR is 17, a list thereof is displayed as hypervisor agents.

(1) The script program starts execution when start instruction is received from the management server 101 (step 700).

(2) An ICMP echo request is broadcast (step 701). The script program broadcasts the ICMP echo request to all computers in the same network by means of the management server 101. At this time, in order to take out MAC address from IP address so as to transmit the ICMP echo request, ARP request is transmitted. IP address and MAC address solved by ARP request are stored in ARP table.

(3) ICMP echo response is received (step 702). The computer which has received the ICMP echo request transmits the ICMP echo response to a transmission source of the ICMP echo request. The script program receives the ICMP echo response.

(4) MAC address and IP address are registered in table (step 703). A pair of IP address and MAC address in the same network has been registered in ARP table of the system in which the ICMP echo request has been broadcasted and the ICMP echo response has been received. The script program registers the pair of MAC address and IP address in the table.

(5) MAC address is taken out from the table and analyzed (step 704). The script program takes out one from the pair of MAC address and IP address registered in the table and analyzes MAC address on the assumption that MAC address is virtual MAC address.

(6) It is judged whether analysis of all MAC addresses stored in the table has been completed (step 705). Analysis of MAC addresses is performed by the number of MAC addresses stored in the table.

(7) When analysis of all MAC addresses stored in the table has not been completed in step 705, it is judged whether analysis result in step 704 of repetition shows hypervisor agent (step 706). The script program judges whether MAC address is expected to concern the hypervisor agent from the analysis result in step 704.

(8) When the analysis result does not show hypervisor agent in step 706, the processing is returned to step 704 and when the analysis result shows hypervisor agent in step 706, IP address corresponding to MAC address analyzed from table is taken out and the pair of the IP address and the analyzed MAC address is displayed (step 707).

(9) The script program which has analyzed all MAC addresses stored in table in step 705 and has outputted all information expected as the pair of IP address and MAC address of hypervisor agent is ended (step 708).

As described above, the arrangement information of the virtual machine can be analyzed by analysis of virtual WWN, analysis of virtual MAC address and retrieval of hypervisor agent and it can be easily judged which physical machine the virtual machine is operated in at present as the result of transferring the virtual machine.

The present invention made by the Inventor has been described on the basis of the embodiment concretely, although it is needless to say that the present invention is not limited to the embodiment and many variations thereto may be made without departing from the spirit and scope of the invention.

In the embodiment, for example, when the virtual machine is transferred, information of the virtual machines of transfer source and transfer destination is exchanged therebetween to thereby perform transfer, although information of the virtual machine of transfer source may be overwritten on information of the virtual machine of transfer destination. In this case, information of the virtual machine of transfer source may be made meaningless or be invalidated to be differentiated from information of the virtual machine of transfer destination.

Furthermore, in the embodiment, the transfer processing of the virtual machine has been made by the management server, although the transfer processing of the virtual machine may be made by another management part except the management server.

The present invention can be widely applied to the system for attainment of effective utilization of computers in which a virtual machine is transferred to a specified physical machine while monitoring load on the system so as to save energy or not to increase the total number of computers uselessly in a data center in which many computers are operated, so that power supply of unoccupied physical computer is cut off or the unoccupied physical computer is utilized for another use.

Furthermore, when hardware of a physical machine is maintained, a virtual machine can be transferred to another physical machine, so that the present invention can be widely applied to the system in which the stop time of system for maintenance can be minimized.

It should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

**Claims**

1.  A control method of a virtual machine system including a plurality of physical machines (106, 107), a system disk and a management part (101) to control virtual machines (108, 109, 111) and in which a plurality of logical virtual machines (108, 109, 111) are operated by control parts (123, 124) in the physical machines (106, 107), each of the virtual machines (108, 109, 111) including a logical communication network interface (116, 118, 122) and a logical storage connection interface (115, 117, 121) and including as address information a virtual network address and a virtual storage interface address, the system disk in which a system to activate the virtual machine (108, 109, 111) is stored being connected to the logical storage connection interface (115, 117, 121), wherein
    when the virtual machine (109) operating in the physical machine (106) is transferred to another physical machine (107), the management part (101) performs the following:

    stopping the virtual machine (109) of transfer source;
    defining the virtual machine (110) of transfer destination in the other physical machine (107);
    changing configuration information of the virtual machine (109) of transfer source and the virtual machine (110) of transfer destination in state that the virtual machine (110) is prevented from being activated; and

canceling prevention of activation of the virtual machine (110) of transfer destination after the configuration information is changed.

2. A control method of a virtual machine system according to Claim 1, wherein
the configuration information contains at least one of the virtual network address, the virtual storage interface address and time difference information.

3. A control method of a virtual machine system according to Claim 1, wherein
when the configuration information of the virtual machine (109) of transfer source and the virtual machine (110) of transfer destination is changed, the management part (101) overwrites the virtual network address and the virtual storage interface address of the virtual machine (109) of transfer source on those of the virtual machine (110) of transfer destination and invalidates the virtual network address and the virtual storage interface address of the virtual machine (109) of transfer source.

4. A control method of a virtual machine system according to Claim 1, wherein
when the configuration information of the virtual machine (109) of transfer source and the virtual machine (110) of transfer destination is changed, the management part (101) exchanges the virtual network address and the virtual storage interface address of the virtual machine (109) of transfer source with the virtual network address and the virtual storage interface address defined in the virtual machine (110) of transfer destination.

5. A control method of a virtual machine system according to Claim 1, wherein
the management part (101) prevents the virtual machine (109) of transfer source from being activated.

6. A control method of a virtual machine system according to Claim 1, wherein
the management part (101) retrieves a network address of the control part (123, 124) operating the virtual machines (108, 109, 111) scattered in the physical machines (106, 107) connected to the same network.

7. A control method of a virtual machine system according to Claim 1, wherein
the management part (101) retrieves a virtual network address of the virtual machine (108, 109, 111) scattered in the physical machines (106, 107) connected to the same network and retrieves which physical machine (106, 107) the virtual machine (108, 109, 111) having the virtual network address is operated in at present.

8. A control method of a virtual machine system according to Claim 1, wherein
the management part (101) is contained in a management server (101) connected to the plurality of physical machines (106, 107) to manage the virtual machines (108, 109, 111).

9. A virtual machine system including a plurality of physical machines (106, 107), a system disk and a management part (101) to control virtual machines (108, 109, 111) and in which a plurality of logical virtual machines (108, 109, 111) are operated by control parts (123, 124) in the physical machines (106, 107), each of the virtual machines (108, 109, 111) including a logical communication network interface (116, 118, 122) and a logical storage connection interface (115, 117, 121) and including as address information a virtual network address and a virtual storage interface address, the system disk in which a system to activate the virtual machine (108, 109, 111) is stored being connected to the logical storage connection interface (115, 117, 121), wherein
when the virtual machine (109) operating in the physical machine (106) is transferred to another physical machine (107), the management part (101) performs the following:

stopping the virtual machine (109) of transfer source;
defining the virtual machine (110) of transfer destination in the other physical machine (107);
changing configuration information of the virtual machine (109) of transfer source and the virtual machine (110) of transfer destination in state that the virtual machine (110) is prevented from being activated; and
canceling prevention of activation of the virtual machine (110) of transfer destination after the configuration information is changed.

10. A virtual machine system according to Claim 9, wherein
the configuration information contains at least one of the virtual network address, the virtual storage interface address and time difference information.

11. A virtual machine system according to Claim 9, wherein

when the configuration information of the virtual machine (109) of transfer source and the virtual machine (110) of transfer destination is changed, the management part (101) overwrites the virtual network address and the virtual storage interface address of the virtual machine (109) of transfer source on those of the virtual machine (110) of transfer destination and invalidates the virtual network address and the virtual storage interface address of the virtual machine (109) of transfer source.

**12.** A virtual machine system according to Claim 9, wherein
when the configuration information of the virtual machine (109) of transfer source and the virtual machine (110) of transfer destination is changed, the management part (101) exchanges the virtual network address and the virtual storage interface address of the virtual machine (109) of transfer source with the virtual network address and the virtual storage interface address defined in the virtual machine (110) of transfer destination.

**13.** A virtual machine system according to Claim 9, wherein
the management part (101) prevents the virtual machine (109) of transfer source from being activated.

**14.** A virtual machine system according to Claim 9, wherein
the management part (101) retrieves a network address of the control part (123, 124) operating the virtual machines (108, 109, 111) scattered in the physical machines (106, 107) connected to the same network.

**15.** A virtual machine system according to Claim 9, wherein
the management part (101) retrieves a virtual network address of the virtual machine (108, 109, 111) scattered in the physical machines (106, 107) connected to the same network and retrieves which physical machine (106, 107) the virtual machine (108, 109, 111) having the virtual network address is operated in at present.

# FIG.1

MANAGEMENT SERVER

101

102    103    104

105

106    108            109                                    107

112  LPAR1          LPAR2  113                     LPAR3

OS1              OS2                    114        OS3

115    116        117    118           111        121    122

125    129                124    127    128    130

123    126              131

132    133    134    135    136    137    138    139

150

FC SWITCH                    ETHERNET SWITCH            141

140

142    LOAD BALANCER                                143

149

STORAGE CONTROLLER

144    145    LUN SECURITY DEFINITION

146  LU10    147  LU20    148  LU30

# FIG.2

# FIG.3

# FIG.4

# FIG.5

HYPERVISOR AGENT 129
OPERATING IN PHYSICAL
COMPUTER 106 OF
TRANSFER SOURCE

MANAGEMENT SERVER 101

HYPERVISOR AGENT 130
OPERATING IN PHYSICAL
COMPUTER 107 OF
TRANSFER DESTINATION

201 CONFIRM THAT ACTIVATION PREVENTION PROCESSING IS COPED WITH

202 CONFIRM THAT AUTOMATIC ACTIVATION IS INVALIDATED

203 CONFIRM ACTIVATION STATE

204 ACTIVATION PREVENTION PROCESSING

205 STOP PROCESSING

206 CONFIRM STOP

207 ACTIVATION PREVENTION PROCESSING

208 GET FC INFORMATION

209 GET FC INFORMATION

210 SET VIRTUAL WWN

211 SET VIRTUAL WWN

213 GET VIRTUAL MAC ADDRESS

212 GET VIRTUAL MAC ADDRESS

214 SET VIRTUAL MAC ADDRESS

215 SET VIRTUAL MAC ADDRESS

216 GET TIME DIFFERENCE INFORMATION

217 GET TIME DIFFERENCE INFORMATION

218 SET TIME DIFFERENCE INFORMATION

219 SET TIME DIFFERENCE INFORMATION

220 SAVE CONFIGURATION INFORMATION

221 SAVE CONFIGURATION INFORMATION

222 CANCEL PREVENTION OF ACTIVATION

223 REQUEST ACTIVATION PROCESSING

224 CONFIRM ACTIVATION STATE

# FIG.6

```
500 ─( START )

      │
      ▼
┌──────────────────────────────────┐
│ ConfirmSrcLparSupportActInhibitAction │──501
└──────────────────────────────────┘
      │
      ▼
    502
      ◇ PROCESSING
     PERFORMED JUST BEFORE IS ──NO──┐
        SUCCESSFUL?                  │
      │                              ▼
     YES                        503 ◇ PROCESSING IS ──NO──┐
      │                              CONTINUED?            │
      │                              │                     │
      │◄──────────────────────────YES                     │
      ▼                                                    │
┌──────────────────────────────────┐                      │
│ ConfirmSrcLparAutoActNoAction      │──504                │
└──────────────────────────────────┘                      │
      │                                                    │
      ▼                                                    │
    505                                                    │
      ◇ PROCESSING                                         │
     PERFORMED JUST BEFORE IS ──NO──┐                      │
        SUCCESSFUL?                  │                     │
      │                              ▼                     │
     YES                        506 ◇ PROCESSING IS ──NO──┐│
      │                              CONTINUED?           ││
      │                              │                    ││
      │◄──────────────────────────YES                    ││
      ▼                                                   ││
┌──────────────────────────────────┐                     ││
│ ConfirmSrcLparActAction            │──507               ││
└──────────────────────────────────┘                     ││
      │                                                   ││
      ▼                                                   ▼
510 ─( NORMAL END )                    511 ─( ABNORMAL END )
```

# FIG.7

600 — ( START )

601 — TAKE OUT 1 BIT FROM LEAST SIGNIFICANT BIT AND ANALYZE WHETHER IT IS WWPN OR WWNN

602 — TAKE OUT 15 BITS FROM SECOND LEAST SIGNIFICANT BIT AND ANALYZE SERIAL NUMBER PECULIAR TO CHASSIS

603 — TAKE OUT 3 BITS FROM 17-TH LEAST SIGNIFICANT BIT AND ANALYZE PARTITION NUMBER

604 — TAKE OUT 4 BITS FROM 20-TH LEAST SIGNIFICANT BIT AND ANALYZE RELATIVE SLOT NUMBER OF PHYSICAL FC HBA

605 — TAKE OUT 1 BIT FROM 24-TH LEAST SIGNIFICANT BIT AND ANALYZE PORT NUMBER OF PHYSICAL FC HBA

606 — TAKE OUT 24 BITS FROM 25-TH LEAST SIGNIFICANT BIT AND COLLATE IT WITH NUMBER PECULIAR TO VENDOR

607 — TAKE OUT 3 BITS FROM 49-TH LEAST SIGNIFICANT BIT AND ANALYZE IDENTIFICATION NUMBER OF VIRTUAL FC HBA

608 — TAKE OUT 3 BITS FROM 52-TH LEAST SIGNIFICANT BIT AND ANALYZE PLATFORM

609 — TAKE OUT 2 BITS FROM 55-TH LEAST SIGNIFICANT BIT AND EXAMINE WHETHER IT COINCIDES WITH RESERVED VALUE

610 — TAKE OUT 4 BITS FROM 57-TH LEAST SIGNIFICANT BIT AND ANALYZE VENDOR MANAGEMENT NUMBER

611 — TAKE OUT 4 BITS FROM 61-TH LEAST SIGNIFICANT BIT AND EXAMINE WHETHER IT COINCIDES WITH FIXED VALUE

612 — ( END )

# FIG.8

620 — ( START )

621 — TAKE OUT 3 BYTES FROM MOST SIGNIFICANT BYTE AND COLLATE IT WITH VENDOR IDENTIFICATION NUMBER

622 — TAKE OUT 2 BYTES FROM 4-TH MOST SIGNIFICANT BYTE AND ANALYZE VIRTUAL NIC SYSTEM IDENTIFICATION NUMBER

623 — TAKE OUT 1 BYTE FROM 6-TH MOST SIGNIFICANT BYTE AND ANALYZE LPAR NUMBER

624 — ( END )

# FIG.9

700 — ( START )

701 — BROADCAST ICMP ECHO REQUEST

702 — RECEIVE ICMP ECHO RESPONSE

703 — REGISTER PAIR OF MAC ADDRESS AND IP ADDRESS IN ARP TABLE FROM INFORMATION CONTAINED IN ICMP ECHO RESPONSE

704 — TAKE OUT MAC ADDRESS FROM TABLE AND ANALYZE IT AS VIRTUAL MAC ADDRESS

705 — ANALYSIS OF ALL MAC ADDRESSES STORED IN TABLE COMPLETED?

YES → 708 — ( END )

NO

706 — ANALYSIS RESULT SHOWS HYPERVISOR AGENT ?

NO →

YES

707 — DISPLAY PAIR OF IP ADDRESS OF MAC ADDRESS

# FIG.10 PRIOR ART

MANAGEMENT SERVER

301

325    326

307

324

BUSINESS
SYSTEM 4

LOAD BALANCE RULE B

302    303    LOAD BALANCE RULE A    304

PHYSICAL
MACHINE 1

BUSINESS
SYSTEM 1

321

PHYSICAL
MACHINE 2

BUSINESS
SYSTEM 2

322

PHYSICAL
MACHINE 3

BUSINESS
SYSTEM 3

323

308    309    310

311  312  313  314    315  316  317  318    319  320  321  322

FC SWITCH

331

ETHERNET SWITCH    332

LOAD BALANCER

333

334    306

335

341

342

STORAGE CONTROLLER

343    LUN SECURITY DEFINITION

344    345    346    347    305

LU10    LU20    LU30    LU40

# FIG.11 PRIOR ART